Europäisches Patentamt

European Patent Office

Office européen des brevets

(11) Veröffentlichungsnummer : **0 186 848
B1**

(12) # EUROPÄISCHE PATENTSCHRIFT

(45) Veröffentlichungstag der Patentschrift :
15.03.89

(51) Int. Cl.⁴ : **G 11 B 25/04**

(21) Anmeldenummer : **85116088.7**

(22) Anmeldetag : **17.12.85**

(54) Vorrichtung zur Tonaufzeichnung und Wiedergabe auf flachen rechteckigen Tonträgern.

(30) Priorität : **29.12.84 DE 8438276 U**

(43) Veröffentlichungstag der Anmeldung :
**09.07.86 Patentblatt 86/28**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**AT--B-- 351 784
DE--A-- 2 646 991
DE--B-- 1 934 134
DE--B-- 2 547 644
US--A-- 4 138 696**

(73) Patentinhaber : **TEPRO Technologie und Produktentwicklung für Elektronik und Automatisierung GmbH & Co.
Kitzingstrasse 9-11
D-1000 Berlin 48 (DE)**

(72) Erfinder : **Mehnert, Gottfried
Messelstrasse 25
D-1000 Berlin 33 (DE)**
Erfinder : **Zorn, Karl-Ludwig, Dr.
Breite Strasse 42
D-1000 Berlin 33 (DE)**

(74) Vertreter : **Huss, Carl-Hans, Dipl.-Ing.
Patentanwalt Griesstrasse 3 a Postfach 14 54
D-8100 Garmisch-Partenkirchen (DE)**

## Beschreibung

Die Erfindung betrifft eine Vorrichtung zur Tonaufzeichnung und Wiedergabe auf flachen rechteckigen Aufzeichnungsträgern, die mindestens auf einer Seite eine magnetische Beschichtung aufweisen, mit einem beweglichen Magnetkopf, der zur Aufzeichnung oder Wiedergabe über eine Abmessung (Breite oder Länge) des Aufzeichnungsträgers in zueinander parallelen Zeilen mit gleichem Abstand in die andere Abmessungsrichtung hin- und herbewegbar geführt ist, wobei am Ende jeder Zeile der Übergang zur nächstfolgenden stattfindet und Einrichtungen vorgesehen sind, die bei der Wiedergabe das Abtasten der Zeilen in der gleichen Laufrichtung des Magnetkopfes wie bei der Aufnahme gewährleisten. Bei einer bekannten derartigen Vorrichtung (DE-B2-19 34 134) wird der Magnetkopf auf einem geradlinig geführten Schlitten abwechselnd hin- und herbewegt, wobei der Zeilenwechsel durch zeilenweises Verschieben des Aufzeichnungsträgers erfolgt.

Diese Vorrichtung hat den Nachteil, daß einerseits die Führung und der Antrieb des Magnetkopfes verhältnismäßig aufwendig und damit kostenerhöhend sind, und daß vor allem der Zeilenwechsel durch die Bewegung des Aufzeichnungsträgers erfolgt, was das Lesen oder betrachten von auf dessen freier Oberfläche aufgebrachten Beschriftungen oder bildlichen Darstellungen erschwert.

Der Erfindung liegt demnach die Aufgabe zugrunde, die vorgenannten Nachteile zu vermeiden und ein mechanisch einfaches Gerät zu schaffen, bei dem der Aufzeichnungsträger bei Aufnahme und Wiedergabe stillsteht, so daß seine sichtbare Oberfläche ungestört betrachtet werden kann.

Diese Aufgabe löst die Erfindung dadurch, daß der Magnetkopf gelenkig an einem Ende eines Schwenkarms angebracht ist, dessen anderes Ende schwenkbar mit einer Schlittenplatte verbunden ist und der zwischen seinen Enden einen Führungsstift aufweist, der unter Federspannung entlang einer in der Schlittenplatte drehbar gelagerten herzförmigen Kurvenscheibe mit asymmetrischer Form gleitet, welche Schlittenplatte mittels einer durch die Richtungsumkehr des Magnetkopfes gesteuerten Mechanik senkrecht zur Sehne der Bewegungsbahn des Magnetkopfes um jeweils eine Zeile gegenüber dem unbeweglich gehaltenen Aufzeichnungsträger verschiebbar geführt ist. -

Um die Spannung der den Führungsstift gegen die Kurvenscheibe ziehenden Feder zumindest annähernd konstant zu halten, ist vorzugsweise auf der Schlittenplatte ein Kompensationsarm mit einem Führungsstift ebenfalls schwenkbar angeordnet. Dieser gleitet auf der dem Schwenkarm gegenüberliegenden Seite entlang der Kurvenscheibe, wobei die Verbindungslinie der Führungsstifte von Schwenk- und Kompensationsarm die Drehachse der Kurvenscheibe schneidet. Außerdem verbindet eine Zugfeder den Schwenkarm mit dem Kompensationsarm.

Für die schrittweise Weiterschaltung der Schlittenplatte ist vorzugsweise eine Gewindespindel vorgesehen, die einen mit der Schlittenplatte verbundenen Reiter verschiebt. Die Schlittenplatte kann dabei mit einem Untersetzungsgetriebe verbunden sein, das einen Nocken antreibt, der einen Kennungskontakt betätigt und gegebenenfalls zusätzlich einen auf einen Schaltkontakt zur Abschaltung des Elektromotors einwirkenden Doppelnocken.

Die Einrichtungen zur Gewährleistung der Übereinstimmung der Laufrichtung des Magnetkopfes bei Aufnahme und Wiedergabe schließt Wechselkontakte ein, von denen einer direkt mit der Steuerelektronik für die teilweise Weiterschaltung der Schlittenplatte und der andere mit einem Kennungskontakt verbunden ist. Dieser Kennungskontakt kann so von der die Weiterschaltung der Schlittenplatte bewirkenden Mechanik betätigt werden, daß er nur bei jeder zweiten Zeile schaltet. Wenn die Wechselkontakte einen abwechselnd an einem von zwei Außenkontakten anliegenden Mittelkontakt einschließen, der mit der Drehachse des den Magnetkopf tragenden Schwenkarmes verbunden ist, kann durch Anlage desselben an dem einen oder anderen Außenkontakt und aus der Stellung des Untersetzungsgetriebes auch ein Signal für die sofortige Zeilenweiterschaltung abgeleitet werden.

Ein Nachlaufen des Elektromotors kann durch eine auf der Gewindespindel vorgesehene mechanische Bremseinrichtung oder gesteuertes Umpolen des Antriebsmotors verhindert werden.

Ein Ausführungsbeispiel der Erfindung ist im folgenden unter Bezugnahme auf die Zeichnungen näher beschrieben. Es stellen dar :

Fig. 1 eine Aufsicht auf die erfindungsgemäße Vorrichtung mit abgenommener Deckplatte ;

Fig. 2 eine Ansicht in Richtung des Pfeiles II in Fig. 1 ;

Fig. 3 eine Explosionsdarstellung der die Schwenkbewegung des Magnetkopfes bewirkenden und ihn tragenden Teile ;

Fig. 4 die für die Konstruktion der Herzkurvenform wichtigen geometrischen Zusammenhänge und

Fig. 5 eine Explosionsdarstellung der die zeilenweise Weiterschaltung des Magnetkopfes bewirkenden Teile.

In der Zeichnung ist die erfindungsgemäße Vorrichtung äußerst vereinfacht dargestellt unter Weglassung aller für das Verständnis der jeweiligen Darstellung nicht erforderlichen Einzelheiten, insbesondere ohne die Darstellung der für den Betrieb des Gerätes erforderlichen elektrischen und elektronischen Schaltung, die nicht Gegenstand der Erfindung und dem Fachmann bekannt ist.

Die dargestellte Vorrichtung dient der ein- oder beidseitigen Tonaufzeichnung und Wiedergabe auf flachen rechteckigen kartenförmigen Aufzeichnungsträgern, die ein- oder beidseitig eine magnetische Beschichtung aufweisen. Dabei wird der Aufzeichnungsträger 1 in Pfeilrichtung A in einen Schlitz 2 eingeschoben und gleitet entlang von Führungskanten 3 in eine Endposition, in der ein Auswerfer 4 gespannt ist, wodurch auch der (nicht dargestellte) Hauptschalter eingeschaltet wird und das Gerät betriebsbereit macht. Eine Andruckfeder 5 sorgt für die reproduzierbare Anlage des Aufzeichnungsträgers 1 an der Referenzkante 6.

Mittels eines Auswerferknopfes 7 kann die Aufnahme oder Wiedergabe jederzeit unterbrochen werden, und der Aufzeichnungsträger wird dann durch den Auswerfer 4 so weit verschoben, daß er etwa 1 cm aus dem Schlitz 2 herausragt und leicht entnommen werden kann. Gleichzeitig wird der Strom abgeschaltet. Der Auswerfer 4 wird auch am Ende des Aufzeichnungs- oder Wiedergabevorganges mittels einer beliebigen bekannten Einrichtung automatisch ausgelöst und schiebt die Karte in der erwähnten Weise aus dem Schlitz.

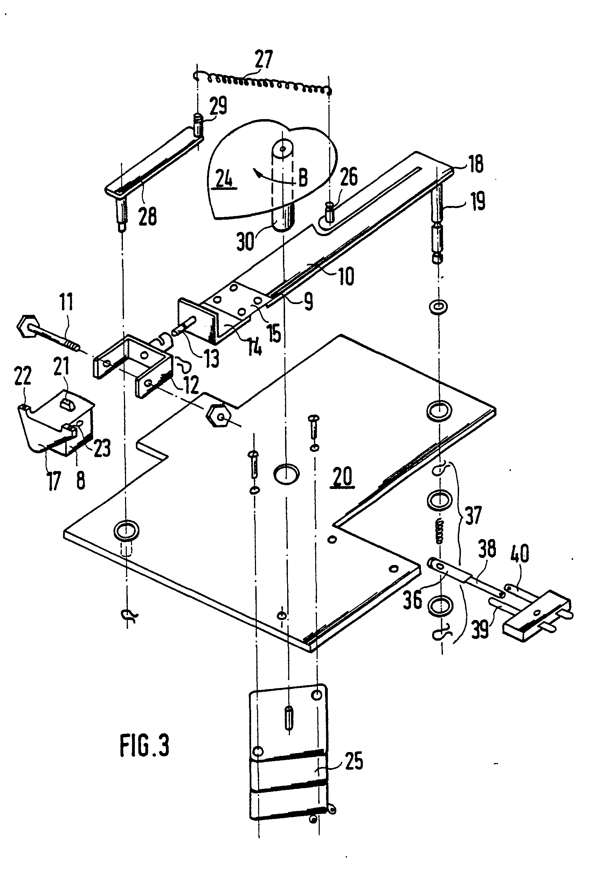

Zur Aufnahme oder Wiedergabe wird ein Magnetkopf 8 mit gleichförmiger Geschwindigkeit zeilenweise auf gekrümmten Bahnen über den Aufzeichnungsträger bewegt. Der Magnetkopf 8 ist dabei an einem Ende 9 eines Schwenkarmes 10 um eine Achse 11 kippbar in einem Gabelstück 12 gelagert. Das Gabelstück 12 ist wiederum auf einem Zapfen 13 (Fig. 3) drehbar, der an einem Winkel 14 befestigt ist, den eine Feder 15 mit dem Schwenkarm 10 verbindet, die den Tonkopf gegen den Aufzeichnungsträger drückt. Das Gegenlager bildet eine den Aufzeichnungsträger überdeckende Abdeckplatte 16 aus durchsichtigem Kunststoff, durch die die Oberseite des Aufzeichnungsträgers sichtbar ist, so daß eine Beschriftung oder eine bildliche Darstellung, beispielsweise in Form einer Fotografie, betrachtet werden kann. Ein Führungsblech 17 ermöglicht das Einschieben des Aufzeichnungsträgers 1 zwischen den Magnetkopf 8 und die Abdeckplatte 16 gegen die Wirkung der Feder 15. Ist die Feder 15 biegsam genug, kann auf das Gabelstück 12 verzichtet werden.

Das zweite Ende 18 des Schwenkarmes 10 ist mit einer Drehachse 19 in einer Schlittenplatte 20 gelagert.

Für eine gute Tonqualität ist die exakte Auflage des Spaltes 21 des Magnetkopfes 8 auf dem kartenförmigen Aufzeichnungsträger 1 äußerst wichtig. Um dies sicherzustellen sind auf dem Führungsblech 17 zwei Noppen 22 und 23 vorgesehen, die zusammen mit dem Kopfspalt 21 eine eindeutig definierte Dreipunktauflage ergeben.

Die Schwenkbewegung des Schwenkarmes 10 wird mittels einer herzförmigen Kurvenscheibe im folgenden auch Herzkurve genannt 24 erzeugt, die; von einem Getriebemotor 25 (Fig. 3) angetrieben, in Pfeilrichtung B umläuft. Ein am Schwenkarm 10 angebrachter Führungsstift 26 gleitet unter Federspannung an der Herzkurve 24 entlang. Diese Federspannung wird durch eine Feder 27 erzeugt. Um die Andruckkraft des Stiftes 26 konstant zu halten, ist auf der Schlittenplatte 20 ein Kompensationsarm 28 mit einem Führungsstift 29 schwenkbar angeordnet, der auf der dem Schwenkarm 10 gegenüberliegenden Seite entlang der Herzkurve 24 gleitet. Dabei schneidet die Verbindungslinie der Führungsstifte 26 und 29 die Drehachse 30 der Herzkurve 24 und die Feder 27 verbindet die beiden Führungsstifte 26 und 29 und somit den Schwenkarm 10 mit dem Kompensationsarm 28. Hierdurch ist unabhängig von der jeweiligen Stellung der Herzkurve 24 der Abstand zwischen den Führungsstiften 26 und 29 und somit die Spannung der Feder 27 immer annähernd konstant.

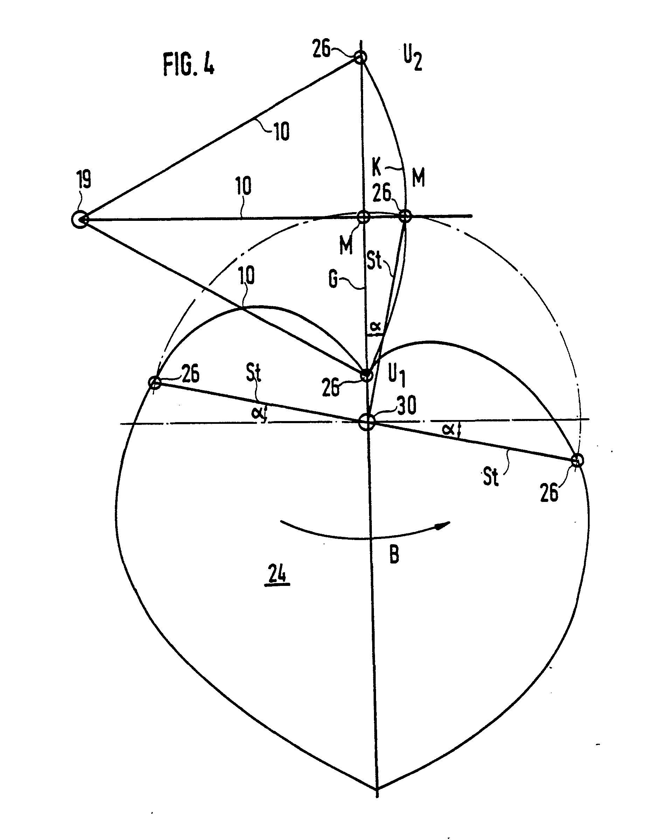

Die für die Form der Herzkurve 24 wichtigen geometrischen Zusammenhänge sind aus Fig. 4 ersichtlich. Für die Konstruktion der Herzkurve ist dabei zu beachten, daß sich der Führungsstift 26 nicht entlang einer Geraden G durch die Umkehrpunkte $U_1$ und $U_2$, auf der auch die Drehachse 30 der Herzkurve liegt, sondern entlang eines Kreisbogens K bewegt, also auch noch eine Bewegung senkrecht zu der vorgenannten Geraden G durchführt. Diese letzte Bewegungskomponente hat zur Folge, daß der Führungsstift 26, ausgehend vom Umkehrpunkt $U_1$, während der ersten 90°-Drehung der Herzkurve 24 in Pfeilrichtung B sozusagen auf der Herzkurve « hochläuft ». Wenn sich die Herzkurve um 90° in Pfeilrichtung B gedreht hat, wenn also die strichpunktiert eingezeichnete 90°-Linie mit der Geraden G zusammenfällt, dann befindet sich der Führungsstift 26 in einer seiner zwei Mittelstellungen M (entsprechend einer vollständigen Hin- und Herbewegung $U_1$-M-$U_2$-M-$U_1$) in einem senkrechten Abstand M'-M von der Geraden G, so daß die Verbindungslinie zwischen der Drehachse 30 der Herzkurve und der Mittelstellung M des Führungsstiftes 26 einen Winkel $\alpha$ einschließt, um den der tatsächliche Anlagepunkt des Führungsstiftes 26 an der Führungsbahn der Herzkurve verschoben ist. Der der Strecke zwischen der Drehachse 30 und der Mittelstellung M des Führungsstiftes 26 entsprechende Strahl St ist also in der Mittelstellung um den Winkel $\alpha$ gegenüber der 90°-Linie verschoben.

Während der Weiterdrehung der Herzkurve und der Wanderung des Führungsstiftes 26 entlang des Kreisbogens zum zweiten Umkehrpunkt $U_2$ verkleinert sich dieser Winkel laufend, bis er in $U_2$ wieder « Null » ist. Während des Rücklaufes von $U_2$ nach $U_1$ wiederholt sich dieser Vorgang und die den einzelnen Schwenkwinkeln des Schwenkarmes 10 zwischen $U_1$ und $U_2$ entsprechenden zu- und abnehmenden Winkel $\alpha$ müssen bei der Konstruktion der die Herzkurve erzeugenden Strahlen St entsprechend berücksichtigt werden.

Hierdurch ergibt sich, wie aus Fig. 4 ersichtlich, eine asymmetrische Form der Herzkurve, wobei erwähnt werden muß, daß diese nicht genau konstruiert, sondern nur ungefähr gezeichnet ist.

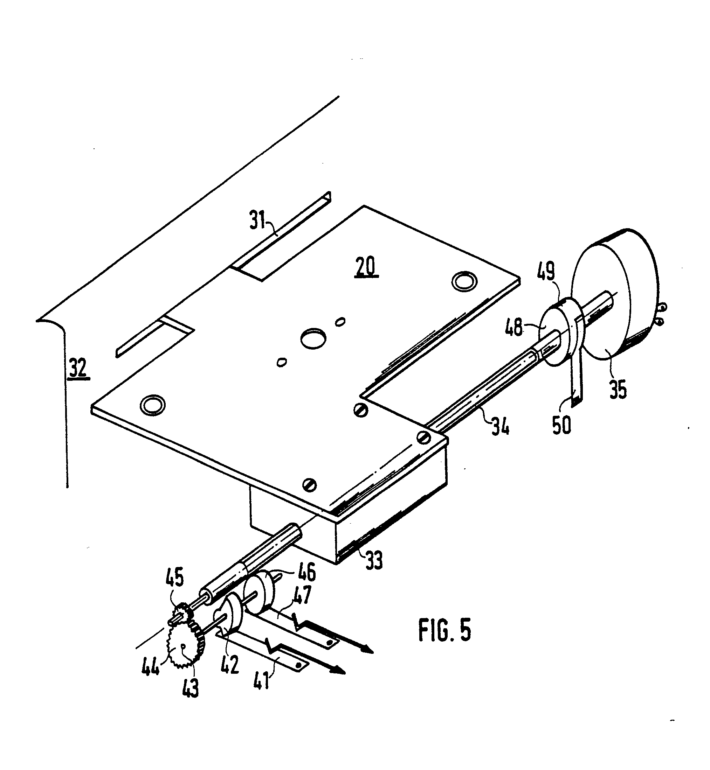

Jeweils in den Umkehrpunkten der Schwenkbewegung des Magnetkopfes 8 wird die die Schwenkeinrichtung tragende Schlittenplatte 20 um eine Zeilenbreite verschoben. Dies geschieht durch eine entsprechende Mechanik. Die Schlittenplatte 20 wird nach Fig. 5 einseitig in einem Schlitz 31 eines Geräterahmens 32 geführt und sitzt auf der anderen Seite auf einem Reiter 33, mit dem sie beispielsweise durch Schrauben verbunden ist. Der Reiter 33 wird durch eine Gewindespindel 34 verschoben, deren Steigung so gewählt ist, daß eine durch einen Elektromotor 35 bewirkte Umdrehung der Spindel genau dem Vorschub der Schlittenplatte um eine Zeile (Spurbreite + Zwischenraum) entspricht.

Zur Erzeugung des Startimpulses für den Spindelantrieb ist auf der Drehachse 19 des Schwenkarms 10 ein Kontaktarm 36 angebracht, der durch eine Rutschkupplung 37 mitgenommen wird. Dieser Arm trägt den Mittelkontakt 38 eines Satzes von Wechselkontakten und wird entsprechend der Laufrichtung des Schwenkarmes durch die Rutschkupplung gegen einen von zwei Außenkontakten 39, 40 gedrückt. Im Augenblick der Umkehr der Schwenkrichtung öffnet dabei der Mittelkontakt 38 den vorher geschlossenen Außenkontakt, um unmittelbar danach den zweiten Außenkontakt zu schließen. Die zugehörige elektronische Schaltung ist so ausgelegt, daß das Öffnen der Außenkontakte den Startimpuls für den Elektromotor 35 auslösen kann.

Für das einwandfreie funktionieren der Vorrichtung ist wichtig, daß der Magnetkopf 8 bei Aufnahme und Wiedergabe die Zeilen gleichmäßig abtastet, daß also Einrichtungen vorgesehen sind, die bei der Wiedergabe das Abtasten der Zeilen in der gleichen Laufrichtung des Magnetkopfes wie bei der Aufnahme gewährleisten. Hierzu wird bei der beschriebenen Vorrichtung einer der beiden Außenkontakte nicht direkt zur Elektronik geführt, sondern über einen Kennungskontakt 41, der von einer Nocke 42 betätigt wird, die auf einer Achse 43 sitzt. Da die von der Gewindespindel 34 über ein aus Zahnrädern 44 und 45 bestehendes Untersetzungsgetriebe im Verhältnis 2 : 1 bezogen auf die Umdrehung der Gewindespindel 34 angetrieben wird, ist der Kennungskontakt 41 nur bei jeder zweiten Umdrehung der Gewindespindel 34 geschlossen. Von ihm aus geht dann das Signal des erwähnten einen Außenkontaktes 39 oder 40 zur Steuerelektronik für den Elektromotor 35.

Durch den Nocken 42 und den von ihm betätigten Kennungskontakt 41 wird erreicht, daß ein von dem betreffenden Außenkontakt am Ende der Schwingungsbewegung des Magnetkopfes 8 in einer Richtung ausgelöstes Signal nur dann zur Steuerelektronik für das Weiterschalten der Schlittenplatte gelangt, wenn die vorausgegangene Kopfbewegung mit der für die betreffende Zeile vorgesehen, beispielsweise bei den geraden Zeilen von rechts nach links und den ungeraden von links nach rechts übereinstimmt. Ist dies nicht der Fall, hat also der Kopf zunächst die Zeile oder einen Teil derselben in falscher Richtung durchlaufen, wird bei Richtungswechsel die Zeile nicht weitergeschaltet und nunmehr in der richtigen Laufrichtung abgetastet. Vom Ende dieses Durchlaufs an erfolgt dann die Schrittschaltung in der vorgesehenen Weise, weil nunmehr sichergestellt ist, daß die Laufrichtung des Magnetkopfes bei Aufnahme und Wiedergabe gleich ist. Da dabei eine erforderliche Korrektur der Abtastvorrichtung nur bei Zeilenwechsel, also nach Erreichen eines Zeilenendes vorgenommen wird, kann, wenn der Beginn eines Ablaufs in falscher Richtung am Anfang oder im Anfangsbereich einer Zeile liegt, eventuell zuviel Zeit bis zur Richtungskorrektur verstreichen. Bei einer verbesserten Ausführungsform ist deshalb vorgesehen, daß einerseits aus der Anlage des Mittelkontaktes 38 an dem einen Außenkontakt 39 oder dem anderen Außenkontakt 40, andererseits aus der Stellung der Zahnräder 44, 45 des Untersetzungsgetriebes über einen Logikbaustein ein Signal gewonnen wird, das bei falscher, d. h. mit der Aufnahmerichtung nicht übereinstimmender Wiedergaberichtung sofort einen Zeilenweiterschaltimpuls auslöst, während bei richtiger Abtastrichtung nichts geschieht.

Auf der Achse 43 sitzt auch noch ein Doppelnocken 46, der bei jeder Umdrehung der Gewindespindel 34 einen Abschaltkontakt 47 betätigt, dessen Impuls den Elektromotor 35 nach einer Umdrehung der Gewindespindel 34 stillsetzt.

Um ein Nachlaufen des Elektromotors 35 zu verhindern, kann eine mechanische Bremseinrichtung vorgesehen sein, die aus einer Bremstrommel 48 mit einem Überzug 49, z. B. Filz, und einer Bremsfeder 50 besteht. Man kann aber auch durch einen Steuerimpuls eine sofort wirksame, jedoch im Gegensatz zur Reibbremse nicht ständig wirkende Bremsung durch Umpolung des Elektromotors vornehmen.

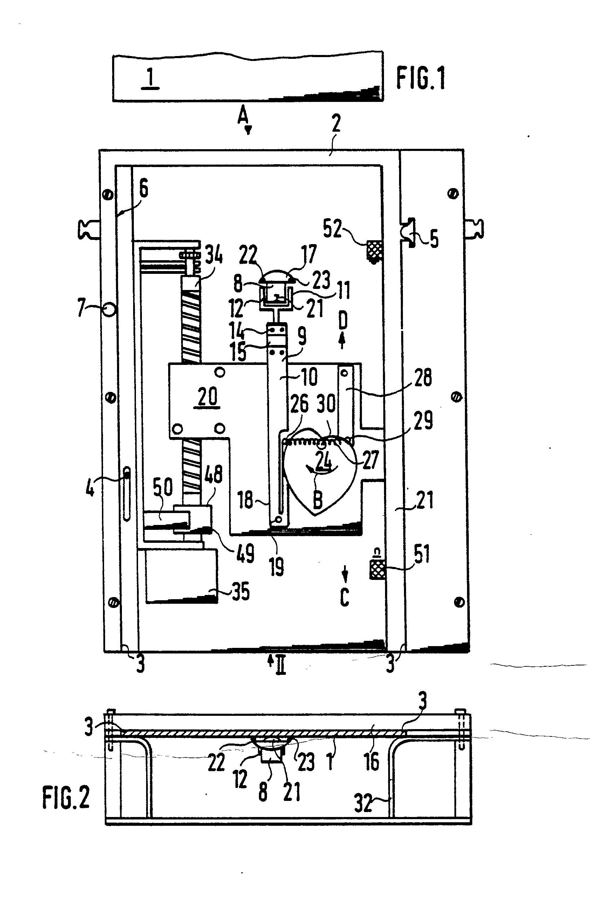

Am Ende des Vorschubweges der Schlittenplatte 20 in Pfeilrichtung C (Fig. 1) ist ein Endschalter 51 vorgesehen, dessen Signal beispielsweise dazu verwendet werden kann, den Elektromotor umzusteuern und damit die Schlittenplatte 20 durch kontinuierlichen Antrieb der Gewindespindel 34 in Pfeilrichtung D zu bewegen und gegebenenfalls gleichzeitig den Getriebemotor 25 über die Kontakte 38 und 39 oder 40 oder diesen parallel geschaltete Kontakte so zu steuern, daß der Magnetkopf 8 in seiner dem Abtastbeginn entsprechenden Endlage zur Ruhe kommt. Sobald die Schlittenplatte 20 in Pfeilrichtung D in ihre Ausgangslage für die Aufnahme oder Wiedergabe einer Tonaufzeichnung zurückgekehrt ist, betätigt sie einen zweiten Endschalter 52, durch den der Elektromotor 35 abgeschaltet und gegebenenfalls vorher wieder umgesteuert wird. Dieser Endschalter kann auch dazu benutzt werden, den Auswerferknopf 7 elektromagnetisch zu betätigen und dadurch den im Gerät befindlichen Aufzeichnungsträger in seiner Entnahmestellung zu verschieben und damit auch den Hauptschalter des Gerätes auszuschalten.

## Patentansprüche

1. Vorrichtung zur Tonaufzeichnung und -wiedergabe auf flachen rechteckigen Aufzeichnungsträgern (1), die mindestens auf einer Seite eine magnetische Beschichtung aufweisen, mit einem beweglichen Magnetkopf (8), der zur Aufzeichnung oder Wiedergabe über eine Abmessung (Breite oder Länge) des Aufzeichnungsträgers in zueinander parallelen Zeilen mit gleichem Abstand in die andere Abmessungsrichtung hin- und herbewegbar geführt ist, wobei am Ende jeder Zeile der Übergang zur nächstfolgenden stattfindet und Einrichtungen (38, 39, 40) vorgesehen sind, die bei der Wiedergabe das Abtasten der Zeilen in der gleichen Laufrichtung des Magnetkopfes wie bei der Aufnahme gewährleisten, dadurch gekennzeichnet, daß der Magnetkopf (8) gelenkig an einem Ende (9) eines Schwenkarmes (10) angebracht ist, dessen anderes Ende (18) schwenkbar mit einer Schlittenplatte (20) verbunden ist und der zwischen seinen Enden einen Führungsstift (26) aufweist, der unter Federspannung entlang einer in der Schlittenplatte (20) drehbar gelagerten herzförmigen Kurvenscheibe (24) mit asymmetrischer Form gleitet, welche Schlittenplatte mittels einer durch die Richtungsumkehr des Magnetkopfes (8) gesteuerten Mechanik senkrecht zur Sehne der Bewegungsbahn des Magnetkopfes um jeweils eine Zeile gegenüber dem unbeweglich gehaltenen Aufzeichnungsträger (1) verschiebbar geführt ist.

2. Vorrichtung nach Anspruch 1, dadurch gekennzeichnet, daß auf der Schlittenplatte (20) ein Kompensationsarm (28) mit einem Führungsstift (29) schwenkbar angeordnet ist, der auf der dem Schwenkarm (10) gegenüberliegenden Seite entlang der Kurvenscheibe (24) gleitet, wobei die Verbindungslinie der Führungsstifte (26, 29) die Drehachse (30) der Kurvenscheibe (24) schneidet. und eine Feder (27) den Schwenkarm (10) mit dem Kompensationsarm (28) verbindet.

3. Vorrichtung nach Anspruch 1, dadurch gekennzeichnet, daß an dem Magnetkopf (8) ein Führungsblech (17) vorgesehen ist, das zwei Noppen (22, 23) aufweist, die zusammen mit dem Kopfspalt (21) des Magnetkopfes (8) eine definierte Dreipunktauflage auf dem Aufzeichnungsträger (1) gewährleisten.

4. Vorrichtung nach Anspruch 1, dadurch gekennzeichnet, daß die Einrichtungen zum zeiweisen Verschieben des Magnetkopfes (8) und zur Gewährleistung der Übereinstimmung der Laufrichtung des Magnetkopfes (8) bei Aufnahme und Wiedergabe durch die Richtungsumkehr des Magnetkopfes (8) betätigte Wechselkontakte (38, 39, 40) einschließt, von denen einer direkt mit der Steuerelektronik für die zeilenweise Weiterschaltung der Schlittenplatte (20) und der andere mit einem Kennungskontakt (41) verbunden ist, der so von der die Weiterschaltung der Schlittenplatte (20) bewirkenden Mechanik betätigt wird, daß er nur bei jeder zweiten Zeile schaltet.

5. Vorrichtung nach Anspruch 4, dadurch gekennzeichnet, daß die Wechselkontakte einen abwechselnd an einem von zwei Außenkontakten (39, 40) anliegenden Mittelkontakt (38) einschließen, der durch eine Rutschkupplung (37) mit der Drehachse (30) des Schwenkarmes (10) verbunden ist.

6. Vorrichtung nach Anspruch 4, dadurch gekennzeichnet, daß für die zeilenweise Weiterschaltung der Schlittenplatte (20) eine von einem Elektromotor (35) angetriebene Gewindespindel (34) vorgesehen ist, die einen Reiter (33) verschiebt, der mit der Schlittenplatte (20) verbunden ist, und von deren Umdrehung die Betätigung des Kennungskontaktes (41) abgeleitet ist.

7. Vorrichtung nach Anspruch 6, dadurch gekennzeichnet, daß mit der Gewindespindel (34) ein Untersetzungsgetriebe (44, 45) im Verhältnis 2 : 1 verbunden ist, das einen Nocken (42) antreibt, der den Kennungskontakt (41) betätigt.

8. Vorrichtung nach Anspruch 6, gekennzeichnet durch einen von dem Untersetzungsgetriebe (44, 45) angetriebenen Doppelnocken (46) der einen Abschaltkontakt (47) zur Abschaltung des Elektromotors (35) betätigt.

9. Vorrichtung nach den Ansprüchen 4 und 5, gekennzeichnet durch eine elektronische Schaltung, die aus der Anlage des Mittelkontaktes (38) an dem einen oder anderen Außenkontakt (39 oder 40) einerseits und aus der Stellung der Zahnräder des Untersetzungsgetriebes (44, 45) andererseits ein Signal für die sofortige Zeilenweiterschaltung ableitet. .

**Claims**

1. A device for sound recording and reproduction on flat rectangular recording carriers (1), which comprise a magnetic coating on at least one side, having a movable magnetic head (8), which for recording or reproduction is guided over one dimension (width or length) of the recording carrier backwards and forwards in the direction of the other dimension in parallel lines which are equally spaced apart, the transition to the subsequent line taking place at the end of each ·line and devices (38, 39, 40) being provided, which ensure that the tracking of the lines during reproduction is effected in the same direction of travel of the magnetic head as during recording, characterised in that the magnetic head (8) is pivotably mounted on one end (9) of a swivel arm (10), whose other end (18) is pivotably connected to a slide plate (20) and which between its ends comprises a guide pin (26), which slides under spring tension along a heart-shaped cam disc (24) having an asymmetrical shape which is pivotably mounted in the slide plate (20), which, by means of a mechanism controlled by the direction reversal of the magnetic head (8) is displaceably guided perpendicular to the chord of the path of movement of the magnetic head by one line in each case relative to the recording carrier (1) which is held stationary.

2. A device according to claim 1, characterised in that a compensating arm (28) having a guide pin (29) is pivotably arranged on the slide plate (20), which guide pin slides on the opposite side to the swivel arm (10) along the cam disc (24), the connecting line between the guide pins (26, 29) intersecting the axis of rotation (30) of the cam disc (24) and a spring (27) connects the swivel arm (24) with the compensating arm (28).

3. A device according to claim 1, characterised in that a guide plate (17) is provided on the magnetic head (8), which guide plate comprises two knubs (22, 23), which together with the head gap (21) of the magnetic head (8) provide a defined triangular bearing for the recording carrier (1).

4. A device according to claim 1, characterised in that the devices for the line displacement of the magnetic head (8) and for ensuring that the direction of travel of the magnetic head (8) corresponds during recording and reproduction include make-and-break contacts (38, 39, 40), which are actuated by the direction reversal of the magnetic head and of which one is directly connected to the control electronics for the line advancement of the slide plate (20) and the other is connected to an identification contact (41), which is actuated by the mechanism effecting the advancement of the slide plate (20) in such a manner that it only switches at every second line.

5. A device according to claim 4, characterised in that the make-and-break contacts include a central contact (38) which alternately rests against one of two outer contacts (39, 40) and which is connected by a friction clutch (37) with the axis of rotation (30) of the swivel arm (10).

6. A device according to claim 4, characterised in that for the line advancement of the slide plate (20) a threaded spindle (34) driven by an electric motor (35) is provided, which displaces a slider (33) connected with the slide plate (20) and whose rotation actuates the identification contact (41).

7. A device according to claim 6, characterised in that a reduction gear (44, 45) is connected with the threaded spindle (34) in the ratio 2 : 1, said reduction gear driving a cam (42) which actuates the identification contact (41).

8. A device according to claim 6, characterised by a double cam (46) which is driven by the reduction gear (44, 45) and which actuates a cutoff contact (47) for switching off the electric motor (35).

9. A device according to claims 4 and 5, characterised by an electronic circuit, which from the abutment of the central contact (38) against one or the other outer contact (39 or 40) on the one hand and from the position of the gear wheels of the reduction gear (44, 45) on the other hand produces a signal for the immediate line advancement.

## Revendications

1. Dispositif d'enregistrement et de reproduction du son sur des supports d'enregistrement (1) plats, rectangulaires, qui présentent au moins une couche magnétique sur une face, comportant une tête magnétique (8) mobile qui pour l'enregistrement ou la reproduction sur une dimension (largeur ou longueur) du support d'enregistrement est guidée dans un mouvement de va-et-vient dans des lignes parallèles entre elles, régulièrement espacées, dans l'autre direction de dimension, le passage à la ligne suivante se faisant à l'extrémité de chaque ligne et des dispositifs (38, 39, 40) étant prévus qui garantissent, pendant la reproduction, la lecture des lignes avec la tête magnétique dans le même sens d'avance que pendant l'enregistrement, caractérisé en ce que la tête magnétique (8) s'articule sur une extrémité (9) d'un bras pivotant (10) dont l'autre extrémité (18) est assemblée pivotante à une plaque coulissante (20) et qui présente, entre ses extrémités, un doigt de guidage (26) qui glisse sous une tension de ressort, le long d'un disque à came (24) asymétrique, en forme de cœur, monté rotatif dans la plaque coulissante (20), laquelle est guidée coulissante par un mécanisme commandé par l'inversion de sens de la tête magnétique (8), perpendiculairement à la corde de la voie de déplacement de la tête magnétique, et ce, à chaque fois d'une ligne, par rapport au support d'enregistrement (1) maintenu immobile.

2. Dispositif selon la revendication 1, caractérisé en ce qu'un bras de compensation (28) avec un doigt de guidage (29) est monté pivotant sur la plaque coulissante (20), lequel bras de compensation coulisse sur le côté opposé au bras de pivotement (10), le long du disque à cames (24), la ligne de jonction des doigts de guidage (26, 29) coupant l'axe de rotation (30) du disque à cames (24) et un ressort (27) reliant le bras pivotant (10) au bras de compensation (28).

3. Dispositif selon la revendication 1, caractérisé en ce qu'il est prévu sur la tête magnétique (8), une tôle de guidage (17) qui comporte deux boutons (22, 23) qui avec la fente de tête (21) de la tête magnétique (8), garantissent un appui défini à trois points sur le support d'enregistrement (1).

4. Dispositif selon la revendication 1, caractérisé en ce que les dispositifs de déplacement ligne par ligne de la tête magnétique (8) et garantissant la concordance du sens de déplacement de la tête magnétique (8) pendant l'enregistrement et pendant la reproduction, comprennent des contacts inverseurs (38, 39, 40) commandés par l'inversion de sens de la tête magnétique (8), dont un est directement relié à la commande électronique pour la commutation ligne par ligne de la plaque coulissante (20) et l'autre à un contact d'identification (41) qui est actionné par le mécanisme commandant la commutation de la plaque coulissante (20) de telle sorte qu'il ne commute qu'une ligne sur deux.

5. Dispositif selon la revendication 4, caractérisé en ce que les contacts inverseurs comprennent un contact central (38) qui s'applique en alternance à chacun des deux contacts extérieurs (39, 40) et qui est relié par un accouplement glissant (37) à l'axe de rotation (30) du bras pivotant (10).

6. Dispositif selon la revendication 4, caractérisé en ce qu'il est prévu pour la commutation ligne par ligne pour la plaque coulissante (20), une tige filetée (34) entraînée par un moteur électrique (35), laquelle pousse un curseur (33) qui est relié à la plaque coulissante (20) et dont la rotation actionne le contact d'identification (41).

7. Dispositif selon la revendication 6, caractérisé en ce que la tige filetée (34) est reliée à un mécanisme démultiplicateur (44, 45) dans un rapport de 2 à 1, qui entraîne une came (42) qui actionne le contact d'identification (41).

8. Dispositif selon la revendication 6, caractérisé par une double came (46) entraînée par le mécanisme démultiplicateur (44, 45), laquelle actionne un contact de coupure (47) destiné à couper le moteur électrique (35).

9. Dispositif selon les revendications 4 et 5, caractérisé par un circuit électronique qui délivre un signal pour la commutation immédiate ligne par ligne, à partir de l'application du contact central (38) sur l'un ou l'autre des contacts extérieurs (39, 40) d'une part et à partir de la position des roues dentées du mécanisme de démultiplication (44, 45) d'autre part.

FIG.1

FIG.2

FIG.3

FIG. 4

FIG. 5

4